# EUROPEAN PATENT SPECIFICATION

(11) **EP 1 494 545 B1**
(45) Date of publication and mention of the grant of the patent: **04.10.2006**
(21) Application number: 03745644.9
(22) Date of filing: 31.03.2003
(51) Int. Cl.: A23J 1/12, A23J 1/14, A23P 1/04, A23L 1/00, A23L 1/0524, A23L 1/20

(54) **PROTEIN ISOLATES, COMPOSITIONS COMPRISING PROTEIN ISOLATES AND METHODS OF USE**
PROTEINISOLATE, ZUSAMMENSETZUNGEN, DIE PROTEINISOLATE ENTHALTEN, UND VERFAHREN ZU IHRER VERWENDUNG
ISOLATS PROTEIQUES COMPOSITIONS COMPRENANT DES ISOLATS PROTEIQUES ET PROCEDES D'UTILISATION

(30) Priority: 29.03.2002 US 368127 P; 01.10.2002 US 414670 P
(43) Date of publication of application: 12.01.2005
(73) Proprietor: Bon Coeur, Inc., Westlake Village, CA 91361 (US)
(72) Inventor: MIKAELIAN, Garegin, Tavares, FL 32778 (US); TEISSIER, Pierre, Oceanside, FL 92054 (US)
(74) Representative: Walton, Seán Malcolm
(86) International application number: PCT/US2003/009507
(87) International publication number: WO 2003/082026

(56) References cited:
- WO-A-02/100186
- US-A- 4 307 117
- US-A- 5 104 674
- US-B1- 6 440 449

## Description

### Field of the Invention

This invention relates to methods for treating a protein isolate to mask the characteristic taste and odor of the protein isolate and to reduce its water adsorption. The protein isolate can be converted into many different food forms and may be incorporated into a variety of food products to increase their protein content without conferring the taste of the protein isolate onto the food product. This invention also relates to compositions comprising the treated protein isolates wherein the water adsorption ratio of the composition is similar to the water adsorption ratio of the untreated protein isolates.

### Background of the Invention

Soy is found in a variety of food forms, e.g., soy drinks, tofu, soy burgers, soy hot-dogs, soy oil, soy butter. In addition, soy protein and isoflavones are linked to a broad band of healthy benefits e.g., cancer prevention, heart protection, menopause relief and bone health. (see e.g., *Energy Times,* February 2001).

In October 1999, the FDA approved a health claim that can be used on labels of soy based foods to tout their heart-healthy benefits. The agency reviewed research from 27 studies that showed soy protein's value in lowering levels of total cholesterol and low density lipoprotein (LDL, or "bad" cholesterol).

Food marketers can now use the following claim, or a reasonable variation, on their products: "Diets low in saturated fat and cholesterol that include 25 grams of soy protein a day may reduce the risk of heart disease. One serving of (name of food) provides (#) grams of soy protein." To qualify for the claim foods must contain per serving;
- 6.25 grams of soy protein
- low fat (less than 3 grams)
- low saturated fat (less than 1 gram)
- low cholesterol (less than 20 milligrams)
- sodium value of less than 480 milligrams for individual foods, less than 720 milligrams if considered a main dish, and less than 960 milligrams if considered a meal.

Some studies show soy has medical benefits in normotensive postmenopausal women. Soy improves blood pressure and lipids but does not improve vascular function or lipoprotein (a) levels, according to this randomized, double blind study. A total of 213 women (105 postmenopausal women) received either soy protein concentrate (40g of soy containing 118 mg isoflavones) or a casein placebo for three months. Subjects were evaluated for changes in blood pressure, lipids, vascular function (systemic arterial compliance and pulse-wave velocity), and endothelial function (flow-medicated vasodilation). Compared with the placebo group, soy recipients had a significant fall in blood pressure (systolic, diastolic and mean), In the lipid analysis, significant reductions were observed in the low-to-high-density lipoprotein ratio and triglyceride levels, along with an increase in lipoprotein (a). Teede et al., "Dietary soy has both beneficial and potentially adverse cardiovascular effects: a placebo-controlled study in men and postmenopausal women", *J Clin Endocrinol Metab,* 86:3053-3060 (2001July).

The industry that produces soy protein products for human consumption has grown enormously since the late 1950s. Since the 1960s, soy protein products have been used as nutritional and functional food ingredients in many food categories available to the consumer. Current production is about one billion pounds of protein products for human consumption per year in the United States - or about four to five pounds per person.

The strong incentive for using low-cost vegetable sources of protein in the world economy has prompted the food industry to focus on vegetable proteins in food formulations.

Soy protein products offer more than just the obvious economic advantages that vegetable proteins have over animal proteins. Advances in soy ingredient technology have resulted in products that can perform many functions in foods such as emulsification, binding, and texture. Soy protein product acceptance has grown because of such functional properties, in addition to their excellent nutritional quality, abundance and low cost. However, the full potential of soy proteins for food applications has not yet been realized in regard to functionality, nutrition and new food concepts.

Soy protein products are an ideal source of some of the essential amino acids used to complement cereal proteins. At present, soy proteins outrank many other food proteins in various worldwide nutrition programs. Yet the positive benefits associated with soy proteins are limited by certain undesirable properties of soy. One limitation is soy's poor organoleptic properties, e.g., a characteristic taste described as beanie, which limits the amount of soy protein that can be incorporated into a target product. It also necessitates the use of large amounts of taste/flavor masking agents which ultimately has a negative effect in regards to the food product's nutritional value.

In addition, with some textured food products such as snack and protein bars, candies, cheese, etc., the total amount of soy protein that one may incorporate into them is limited due to the very high water absorption ratio of soy protein. Previously described soy protein concentrates can absorb up to 400% of their initial dry weight.

European application 01274205.2, originally published as WO02/100186 and comprised in the state of the art only by virtue of Article 54(3) EPC, discloses production of a soy protein enriched drink containing a soy protein isolate produced by high-shear mixing with a pectin blend consisting of pectin, cellulose gel and microcrystalline cellulose blend.

US Patent 6,440,449 relates to a method of infusing compositions into food products by gradually increasing the brix of an osmotic dehydration solution containing the food products. The compositions may include, e.g., phytochemicals, nutraceuticals such as: vitamins, minerals, isoflavoranals, lycopene, resveratol, indocarbonals, anthocyanins, soluble fiber, high protein rice, soy isolate or others. The food product may be coated with a coating substance such as gelatin, pectin or starch prior to or after drying and the phytochemical or medicinal may be infused into the coated food product.

US Patent 4,307,117 relates to a method for stabilizing curcumin against color changes by dispersing the curcumin in an aqueous film-forming solution and drying the solution wherein the improvement comprises adding in an amount of an acid to the solution to reduce the pH thereof to below 6. The composition comprises curcumin, an acid, and may also comprise an encapsulant capable of forming a coating around a hydrophobic material in water and are co-dried. The curcumin may be incorporated into dry food mixes.

US Patent 5,104,674 relates to microfragmented fibers of ionic polysaccharide/protein complex in aqueous dispersions suitable for utilization as nutritious bulking, viscosity or texture control agents. It discloses that by appropriate selection of the ionic polysaccharide component and the protein component and the interaction conditions, a wide variety of syneresed ionic polysaccharide/protein complex precipitation may be provided ranging from substantially isotropic gels to fibrous anisotropic products. It also provides various examples of food products comprising the microfragments.

### Description of the Invention

Described herein is a procedure that dramatically improves the organoleptic properties of a protein isolate, particularly soy protein isolates and concentrates, without detrimentally affecting the physical-chemical characteristics of the protein through denaturation. As used herein a protein isolate refers to a preparation from vegetable or animal matter that has been cleaned, and for seeds dehulled, and is free of most of the oil and water soluble non-protein constituents. Such protein isolates include protein isolates and concentrates, e.g., soy protein isolates and concentrates and wheat protein concentrates which comprise at least about 70% protein on a moisture free basis, that are prepared routinely in the art and/or may be purchased from commercial companies, e.g., ADM Protein Specialists (Decatur, IL), Dupont Protein Technologies International (Wilmington, DE) or Calpro Ingredients (Corona, CA). Preferably the protein isolates are at least 70% protein on a moisture free basis. More preferably the protein isolates are at least about 90% protein on a moisture free basis. Most preferably the protein isolates are soy protein concentrates and soy protein isolates. Soy protein concentrates containing about 70% protein may be prepared from defatted meal by selective extraction of the soluble carbohydrates (sugars). Extraction with aqueous alcohol is the most common process for their production, but other methods of production are known in the art. Soy protein isolates having protein concentrations of about 96% may be prepared by selective solubilization of the protein (e.g., alkaline extraction) followed by purification of the extract and precipitation of the protein (e.g., by acidification to the isoelectric point). The undesirable flavor of any protein, particularly a soy protein isolate or concentrate, e.g., Ardex R^{™} from ADM, or Supro® 121 from Dupont Protein Technologies, Intl., etc., becomes negligible when treated according to the methods disclosed herein. Moreover, the disclosed method can substantially reduce water absorption by the protein. Thus another aspect of this invention is a protein isolate prepared by the methods of this invention wherein the protein isolate has a bland flavor and has a lower water adsorption ratio as compared to a protein isolate that is not prepared according to the methods of this invention. Using the protein isolates of this invention it is possible to increase the amount of protein that can be added to a variety of foodstuffs without conferring the characteristic flavor or odor of the particular protein isolate. This is particularly advantageous for soy protein isolates and concentrates which have undesirable organoleptic properties, e.g., soy's characteristic "beanie" soy taste and odor.

The protein isolates, particularly soy protein concentrates and isolates, prepared by the methods of this invention may be used to prepare a variety of foods already known in the art, e.g., tofu, soy ice cream, grain-based food products, e.g., snack bars, breakfast cereals, pancakes, waffles, muffins, tortillas, breads, cakes and cookies, or protein bars, puddings, meal replacement formulations, e.g., Slim Fast^{™} and Jenny Craig^{™} liquid food diets wherein the meal replacement is a thick liquid, vegetarian foods, e.g., vegetarian "veggie" burgers, hot-dogs, deli slices, emulsion type sausages, fish sticks and meatballs, and meat replacements and candies. Everywhere soy protein is currently used, the prepared soy protein concentrates and isolates of this invention can be used, e.g., in soy burgers and soy hot dogs, soy ice cream and tofu. While beverages may also comprise the soy isolates of this invention, the isolates will not dissolve efficiently and thus will settle out which may be undesirable to many consumers. In addition, the protein isolates prepared by the methods of this invention make it possible for food formulators to use higher percentages of the protein isolates, particularly soy protein isolates and concentrates, in those food products that already comprise such isolates, e.g., food products that already comprise soy protein, and to use the protein isolates, particularly soy protein isolates and concentrates of this invention in a wider variety of food products without substantially altering the taste and texture of the food products.

An example disclosed herein is a soy protein bar wherein the level of soy protein concentrate is 53% by weight of the protein bar and still the protein bar has an acceptable taste and texture. This percentage of soy protein concentrates is at least twice the level of soy protein concentrates prepared by other methods that can be added to a protein bar without conferring a soy taste and odor. Products containing the soy protein concentrates of this invention have a moister texture than those containing similar amounts of other soy protein concentrates. The taste of the protein bars disclosed herein is noticeably better than the taste of the control made with the untreated soy protein concentrate which had an unmistakable beanie soy taste.

In one embodiment of this invention, the method comprises mixing a protein isolate,, particularly a soy protein concentrate, with an aqueous solution of a polysaccharide, e.g., sucrose, fructose, cellulose or pectin, preferably a pectin, wherein the polysaccharide is present in the aqueous solution in an amount sufficient to coat the protein. Preferably the ratio of the polysaccharide to protein in the aqueous solution is at least about 1/100 w/w, more preferably the ratio of polysaccharide to protein is about 1/100 w/w. The pH of the aqueous solution is preferably neutral to slightly acidic, e.g., about pH 7 to about pH 5.8. Preferably the aqueous solution consists essentially of water and the polysaccharide such that the protein isolate is coated with the polysaccharide. Thus, the methods of this invention are in contrast to other methods known in the art wherein the flavor is extracted from the protein isolate.

Preferably the pectin is a low methoxyl pectin powder, either conventional or amidated, preferably amidated. The polysaccharide is mixed with water to prepare an aqueous polysaccharide solution. Preferably the polysaccharide and water are mixed at a temperature of about 18°C to about 50°C. The protein isolate and aqueous polysaccharide solution may be mixed in any suitable mixer known in the art, e.g., a high shear mixer, a rotary mixer or a planetary mixer. The protein isolate and aqueous polysaccharide solution are mixed for sufficient time and sufficient agitation to coat the protein with polysaccharide. For example, when the protein isolate is initially mixed with the aqueous solution it is heavy and resembles a paste, as the protein becomes coated by the polysaccharide the mixture becomes very smooth, shiny and silky. A sufficiently mixed solution looks like an unctous creamy mixture. One of skill in the art can easily adjust the mixing times to sufficiently coat the protein without using undue experimentation. For example the protein and aqueous polysaccharide mixture may be mixed in a high shear mixer for about 1 minute to about 5 minutes at low speed and then about 3-5 minutes at medium speed, although these times may be adjusted easily for a particular type of mixer. After mixing, the aqueous polysaccharide and protein mixture is dried to a powder form. The aqueous polysaccharide and protein mixture may be dried, for example by vacuum drying or spray drying.

The prepared protein isolate of this invention, particularly soy protein concentrate and wheat protein concentrate, may be incorporated into many food products. For example it may be incorporated into farinaceous food products, e.g., snack bars, breakfast cereals, breads, pancakes, doughnuts, cakes, muffins, or tortillas, and energy bar formulations, puddings, meal replacement formulations, e.g., Slim Fast^{™} and Jenny Craig^{™} liquid food diets wherein the meal replacement is a thick liquid, vegetarian foods, e.g., vegetarian burgers, hot dogs, deli meats, emulsion type sausages, fish sticks and meatballs, soy ice cream, tofu, meat replacements, or candies.

In another embodiment of this invention the method comprises steps to "customize" the flavor profiles of the treated protein isolate. For example, a fruit or meat flavoring, e.g. a beef, chicken, fish or pork flavoring used commonly in the art, which do not alter the coating effects of the polysaccharide, can be added to the aqueous solution prior to mixing in the polysaccharide. For example, a customized flavor would be a "Beef Flavored" protein isolate to be used in vegetarian "veggy" burgers.

The methods of this invention can be applied to any commercially available protein isolate, preferably not a protein isolate that is a highly soluble protein. Suitable protein isolates include, among others, rice protein concentrates, soy protein concentrates, whey protein concentrates, wheat protein concentrates and crustacean, e.g., shrimp, protein concentrates and fish protein concentrates. The methods of this invention can also be used in conjunction with machinery that is commonly used with protein isolates, particularly soy protein concentrates.

The protein isolate produced by the methods of this invention has a slightly lower protein content than the "parent" protein isolate. The protein content reduction is approximately 2% of moisture free basis (mfb). For example, some currently available soy protein isolates typically have a 90% protein content. When processed through the methods of this invention, the protein content is reduced to 88%. In addition, the protein isolates of this invention have a low water adsorption ratio, i.e., the water adsorption ratio is reduced to about 40% to about 65% or less than the water adsorption ratio of the "parent" protein isolate that has not been treated with the methods of this invention. Water adsorption ratio described herein is measured by determining the dry weight of the parent protein isolate, which has not been treated with the methods of this invention, and the protein isolate of this invention, then fully hydrating the parent protein isolate and the protein isolate treated by the methods of this invention over a period of about one hour, centrifuging the hydrated isolates at 5500 rpm for one hour, removing the supernatant (excess water) and determining the weight of the hydrated protein pellets. The ratio of the isolates hydrated weight to the isolate's dry weight is the water adsorption ratio (hydrated weight/dry weight). Thus in the case of soy proteins, much higher levels of the soy proteins of this invention, e.g., at least twice the level of other soy proteins, may be included in a variety of food products without conferring a beanie soy taste to the food product.

Another embodiment of this invention is a method for preparing compositions which comprise the protein isolates, prepared as described above, and yet the compositions have a water adsorption ration that is similar to or higher than the water adsorption ratio of the untreated protein. The compositions, like the protein isolates, do not have the beanie or bitter taste that is associated with the untreated protein isolates. The method comprises treating the protein isolates with an aqueous solution containing a combination of (1) a polysaccharide, preferably pectin, in order to coat the protein isolates, which blocks off the flavor of the protein molecule as well as serving as a moisture barrier, and (2) a fiber, preferably an hydrocolloid, e.g., glucomannan (Konjac Propol RS, Kyoei Konnyaku, Inc. Japan). The fiber should be of a sufficient amount that the water adsorption ratio of the composition is about the ratio of the untreated protein isolates. For example, for glucomannan the composition should comprise about 1.5% to about 4% glucomannan to protein (w/w). The fiber absorbs the water which is no longer absorbed by the treated protein isolates. The composition comprising the treated protein isolates and fiber are then dried to a powder form. The compositions of this invention are bland in taste, have a water absorption ratio about equal to or higher than the untreated protein isolates and can be used in a wide range of food products, e.g., meat replacements, sausage, hot-dogs, deli slice, emulsion type sausage, fish stick or meatballs, soy ice cream, dry beverage mixes, farinaceous food products, e.g., breads, pastas, waffles, pancakes, cakes, cookies etc. without adversely affecting the organoleptic properties, e.g., taste, odor or texture, of the food products.

### EXAMPLES

### EXAMPLE 1

**SOY PROTEIN ISOLATE**

| | |
|---|---|
| Product: | Soy protein Isolate |
| | Ardex R^{™} |
| | Food Grade |
| Manufacturer: | ADM |
| Protein Content: | 94% (Dry Basis) |
| Moisture absorption: | 1 part protein to 5 parts water. |
| Product Description: | Gray colored powder with beanie taste. |

A solution containing five grams of pectin Type LM- 104AS (available from CP Kelco US, Inc. Wilmington, DE) and two liters five hundred milliliters of water at a temperature of 20°C was prepared in a high shear mixer for one minute to form an aqueous pectin solution.

Five hundred grams of the soy protein isolate was then added to the aqueous pectin solution and mixed for one minute at low speed then 3 minutes at medium speed the mixture formed an unctous creamy mixture

The resulting mix was vacuum dried to a powder.

The organoleptic properties and pH of the resulting improved protein isolate were assayed and compared to the untreated soy protein. The resulting improved protein isolate was a light yellow color, tasteless and the water absorption is 1 part of protein for 2.5 parts of water.

### EXAMPLE 2

**WHEAT PROTEIN POWDER (GLUTEN)**

| | |
|---|---|
| Product: | Wheat Protein Concentrate |
| | Food Grade |
| Distributor: | Milligan Sales |
| Protein Content: | 75% "claimed" |
| Moisture absorption: | 1 part protein to 3.5 parts water. |
| Product Description: | Yellow powder with an offensive acidic taste. |

A solution containing five grams of pectin Type LM- 104AS (available from CP Kelco US, Inc. Wilmington, DE) and one liter seven hundred and fifty milliliters of water at a temperature of 20°C was prepared in a high shear mixer for one minute to form an aqueous pectin solution.

Five hundred grams of wheat protein concentrate was then added to the aqueous pectin solution and mixed for one minute in the high shear mixer at low speed, then 4 minutes at medium speed until it formed an unctous creamy mixture.

The resulting mix was spray dried to a powder.

The organoleptic properties and pH of the resulting protein concentrate were assayed. The resulting protein concentrate was a light yellow color, tasteless, the acidity was negated and the water absorption ratio was 1 part of protein for 1.5 parts of water.

### EXAMPLE 3

**WHEY PROTEIN CONCENTRATE**

| | |
|---|---|
| Product: | Whey protein concentrate |
| | Food Grade |
| | Premium Quality |
| Manufacturer: | Calpro Ingredients |
| Protein Content: | 75% |
| Moisture absorption: | 1 part protein to 1.4 parts water. |
| Product Description: | Yellow powder with offensive taste. |

A solution containing five grams of pectin Type LM-104AS (available from CP Kelco US, Inc. Wilmington, DE) and seven hundred milliliters of water at a temperature of 20°C was prepared in a high shear mixer for one minute to form an aqueous pectin solution.

The aqueous pectin solution was transferred into a large planetary mixer with a whip attachment.

Five hundred grams of whey protein concentrate was then added to the aforementioned solution and mixed in the planetary mixer for one minute at low speed then 3 minutes at medium speed it formed an unctous creamy mixture.

The resulting mix was spray dried to a powder.

The organoleptic properties and pH of the resulting protein isolate were assayed. The resulting protein isolate was a light yellow color, tasteless and the water absorption was 1 part of protein for 0.8 part of water.

### NUTRITIONAL ANALYSIS

The untreated soy protein isolate and the treated soy protein isolate of Example 1 were assayed for protein content. The results are shown below:

**Ardex R^{™} protein isolate**

| | | |
|---|---|---|
| Product | : Soy protein isolate; 100 Grams | |
| | : Sampled 04/13/01 Report Moisture as % Protein. | |
| MOISTURE AIR OVEN 135°C | | 5.46 % |
| PROTEIN, NITROGEN ANALYSER | | 89.77 % |
| PROTEIN % DRY BASIS | | 94.95 % |

**Ardex R™ protein isolate**

| (prepared as described in Example 1) | | |
|---|---|---|
| Product | : Treated soy protein isolate; 100 Grams | |
| | : Sampled 04/13/01 Report Moisture as %, Protein. | |
| MOISTURE AIR OVEN 135°C | | 4.57 % |
| PROTEIN, NITROGEN ANALYSER | | 89.00 % |
| PROTEIN % DRY BASIS | | 93.26 % |

### PROTEIN QUALITY

The untreated soy protein isolate and the soy protein isolate prepared as in Example 1 were assayed for amino acid contents with the result shown below:

| Original | | Example I | |
|---|---|---|---|
| Ardex R^{™} Soy Protein Isolate | | Improved Ardex R^{™} Soy Protein Isolate | |
| Weight: 100 g (3.527 oz) | | Weight: 100 g (3.527 oz) | |
| PROTEIN QUALITY | | PROTEIN QUALITY | |
| Amino Acid | Actual Ratio | Amino Acid | Actual Ratio |
| Histidine | 28.7 | Histidine | 28 |
| Isoleucine | 56.4 | Isoleucine | 55.9 |
| Leucine | 91.5 | Leucine | 91.4 |
| Lysine | 69.1 | Lysine | 66.9 |
| Methionine + Cystine | 26.6 | Methionine + Cystine | 25.8 |
| Phenylalanine + Tyrosine | 102 | Phenylalanine +Tyrosine | 100 |
| Threonine | 41.5 | Threonine | 40.9 |
| Tryptophan | 12.8 | Tryptophan | 11.9 |
| Valine | 56.4 | Valine | 55.9 |

| | | | |
|---|---|---|---|
| Ratios are in milligrams of amino acid per gram of Protein (mg/g Protein) | | | |

The results of these tests show that:
1. The treated protein became odorless with a bland taste, i.e., little if any of the characteristic beanie taste of soy was detectable. The protein contained slightly lower protein content than the "parent" protein. The protein content reduction is approximately 2% (mfb).
2. The treated protein, when immersed in water absorbed 50% less water that the "parent" protein.
3. The protein quality remains substantial.

### EXAMPLE 4

**SOY PROTEIN BAR**

| Sample A | weight (% w/w*) | Sample B | weight (% w/w*) |
|---|---|---|---|
| ArdexR^{™} | 13.3g (12% w/w) | Improved Ardex R^{™} | 54.6g (53% w/w) |
| other ingredients | | other ingredients | |
| Non fat dry milk powder | | Non fat dry milk powder | |
| Fructose | | Fructose | |
| Egg albumin | | Egg albumin | |
| Gum | | Gum | |
| Water | | Water | |
| Flavoring | | Flavoring | |
| Rice Krispies^{™} | | Rice Krispies^{™} | |
| Water | 66.5 g (66% w/w) | Water | 12g (12%w/w) |

| | | | |
|---|---|---|---|
| * %w/w is approximate weight ingredient/total bar weight | | | |

The same amounts of all the ingredients, other than the soy protein isolate and water, were used in the protein bar formulations. The ingredients were mixed in a Hobart planetary mixer. The mixtures were formed into bars by rolling into sheets between papers and cutting into rectangular bars. The bars were then dipped in chocolate.

The soy protein bars made with the untreated Ardex R^{™} soy protein isolate and with "Improved" Ardex R^{™}, which is Ardex R^{™} soy protein isolate prepared according to the methods of this invention, were manufactured identically. The ingredients in the bars were identical except for the type and amount of soy protein and the amount of water. The amount of untreated Ardex R^{™} soy protein isolate in the protein bar was 12% w/w. At this percentage of soy protein isolate, the beanie taste characteristic of soy protein concentrates was predominant and the bars were dry & crumbly. Higher amounts of the untreated soy protein could not be incorporated into this formulation due to its high ratio of water adsorption. The amount of "Improved" Ardex R^{™} soy protein isolate incorporated into the bar was 53% by weight. Even at this high percentage of soy protein, there was no beanie soy taste and the bars were moist and tasty. The texture of the improved Ardex R^{™} containing bar was mousse-like, similar to a candy bar such as a Three Musketeers Bar^{™}. Higher percentages, e.g., 63% could also be incorporated into the bar without conferring a beanie taste on the finished product.

The methods described herein are not methods to deflavor, separate, hydrolyze, reduce objectionable flavors or debitter the proteins, but rather they are methods to block and conceal the undesirable flavors of the protein molecules while adding a moisture barrier to the proteins resulting only in small changes to the nutritional properties of the proteins being treated (See Nutritional and protein quality results, *supra*).

### EXAMPLE 5

Three samples were prepared
- Sample A.: Original Soy Protein ADM 825 Pro-Farm "control No. 1"
- Sample B.: "control No.2" treated as described in Example 1
- Sample C.: "test"

The treated soy protein Sample B was prepared as follows. In a blender (medium speed) 500g of water at 42°C and 3g of low methoxy pectin Lm18CG were mixed for one minute with 0.2g of peanut flavor. Then 120g of soy protein Pro-Farm 825 from ADM was added and mixed for four minutes. The resulting mix was dried in a "Lang" oven at 150°F for three hours. The dried protein was then milled to obtain a fine powder.

Sample C was prepared as follows. In a blender (medium speed) 500g of water at 42°C and 3g of pectin Lm18CG were mixed for one minute. Then 1g of Propol RS (Konnyaku, Japan) was added and mixed for another minute. 120g of soy protein Pro-Farm 825 from ADM was added and mixed for four minutes. The resulting mix was dried in a "Lang" oven at 150°F for three hours and ten minutes. The dried proteins were then milled to obtain a fine powder.

The protein isolates were assayed for appearance, taste and water adsorption ration. The results are presented in Table A.

| **Table A** | | | |
|---|---|---|---|
| **Sample** | **Appearance** | **Taste** | **Water Absorption Ratio** |
| A | Free flowing powder. Yellow color. | Characteristic protein flavor with acidic taste. | The protein absorbed 4 times its own weight in water. |
| B | Fine powder, free flowing. Yellow to brownish color. | Bland taste with peanut notes. | The protein absorbed 2.2 times its own weight. |
| C | Fine powder, free flowing. Gray color. | Bland taste. | The protein absorbed 4 times its own weight. |

The goal of this test was to establish whether adding a fiber to the pectin treated soy protein would produce a composition which has the water absorption properties of the original untreated soy protein but which does not have the characteristic taste of the protein.

The results demonstrate that Sample A, the original untreated soy sample, absorbed four times its weight in water while the treated protein, Sample B, absorbed only 2.2 times its own weight (48% reduction).

Sample C, wherein fiber was added to the treated protein, absorbed four times its weight in water. Thus, the water absorption ratio of Sample A and C are similar. In addition, the treated proteins with added fiber did not have the characteristic protein taste and acidity.

To confirm that the added fiber acted as intended, additional tests were performed.

### EXAMPLE 6

All ingredients used in the test are approved by the USDA/FDA and are "GRAS" *(Generally recognized As Safe).*

**Sample A: Sample A** is a soy protein isolate "Ardex R" ADM

**Sample B:** Sample B is a soy protein isolate "Ardex R" treated with Acacia Gum 3.3% (w/w).

The treated protein was prepared as follows. In a blender (medium speed) 500g of water at 45°C and 4g of substance 00014 valsp (acacia gum) was mixed for one minute. Then 120g of soy protein Ardex R from ADM was added and mixed for five minutes. The resulting mix was dried in a "Lang" oven at 150°F for six hours and forty minutes. The dried proteins were then milled to obtain a fine powder.

**Sample C:** Sample C is a soy protein isolate "Ardex R" treated with both acacia gum 3.3% (w/w) and pectin 2.5% (w/w). Sample C was prepared as follows. In a blender (medium speed) 500g of water at 45°C and 3g of pectin Lm18CG was mixed for one minute, then 4g of substance 00014 valsp (acacia gum) was mixed for another minute. Then 120g of soy protein Ardex R from ADM was added and mixed for five minutes. The resulting mix was dried in a "Lang" oven at 150°F for four hours and fifty minutes. The dried proteins were then milled to obtain a fine powder.

**Sample D:** Sample D is a soy protein isolate "Ardex R" treated with cyclodextrin 2.5% (w/w) and glucomannan 1.75% (w/w). Sample D was prepared as follows. In a blender (medium speed) 500g of water at 45°C, 3g of Cyclodextrin (cavitron 82860) and 1.5g of glucomannan (Konjac Propol RS) was mixed for one minute. Then 120g of soy protein Ardex R from ADM was added and mixed for three minutes. The resulting mix was dried in a "Lang" oven at 150°F for five hours. The dried proteins were then milled to obtain a fine powder.

**Sample E:** Sample E is a soy protein isolate "Ardex R" treated with Inulin 3.3% (w/w). Sample E was prepared as follows. In a blender (medium speed) 500g of water at 45°C and 4g of Inulin (Frutafit IQ) was mixed for one minute and twenty seconds, then 120g of soy protein Ardex R from ADM was added and mixed for four minutes and thirty seconds. The resulting mix was dried in a "Lang" oven at 150°F for five hours and fifty-five minutes. The dried proteins were then milled to obtain a fine powder.

**Sample F:** Sample F is a soy protein isolate "Ardex R" treated with pectin 2.5% (w/w) and glucomannan 1.75% (w/w). Sample F was prepared as follows. In a blender (medium speed) 500g of water at 45°C, 3g of pectin Lm18CG and 1.5g of glucomannan (Konjac Propol RS) were mixed for two minutes. Then 120g of soy protein Ardex R from ADM was added and mixed for four minutes and thirty seconds. The resulting mix was dried in a "Lang" oven at 150°F for two hours and ten minutes. The dried proteins were then milled to obtain a fine powder.

**Sample G:** Sample G is a soy protein isolate "Ardex R" treated with pectin 2.5% (w/w) and glucomannan 3.3% (w/w). Sample G was prepared as follows. In a blender (medium speed) 500g of water at 45°C, 3g of pectin Lm18CG and 4g of glucomannan (Konjac Propol RS) were mixed for one minute and forty-three seconds. Then 120g of soy protein Ardex R from ADM was added and mixed for four minutes and thirty seconds. The resulting mix was dried in a "Lang" oven at 150°F for three hours and twenty minutes. The dried proteins were then milled to obtain a fine powder.

The samples were assayed for their appearance (fineness of grain, ability to free flow and color) taste and water absorption. The results are presented in Table B.

| **Table B** | | | |
|---|---|---|---|
| **Sample** | **Appearance** | **Taste** | **Water Absorption Ratio** |
| A | Fine powder, free flowing. Brownish color. | Acidic and strong beanie flavor | The protein absorbed 2.7 times its own weight. |
| B | Fine powder, free flowing. Golden color. | Bland taste, no odor | The protein absorbed 1.9 times its own weight |
| C | Fine powder, free flowing. Light gold color | Bland taste, no odor | The protein absorbed 2.0 times its own weight. |
| D | Fine powder, free flowing. Light gray color | Slightly acidic otherwise bland taste, no odor. | The protein absorbed 2.8 times its own weight. |
| E | Fine powder, free | Bland taste, no | The protein |
| | flowing. Golden color | odor | absorbed 2.0 times its own weight. |
| F | Fine powder, free flowing. Gray color. | Bland taste, no odor | The protein absorbed 2.9 times its own weight. |
| G | Fine powder, free flowing. Light yellow color | Bland taste, no odor. | The protein absorbed 3.6 times its own weight. |

The compositions made with gums, Samples B and C, and the composition made with Inulin, Sample E, had reduced levels of undesireable flavors and reduced water absorption ratio but did not absorb additional moisture to restore the desired water adsorption ratio.

The compositions comprising glucomannan, Samples D, F and G, regardless of the flavor concealment agent (cyclodextrin or pectin) displayed water absorption ratios similar to the original protein (Sample A).

The purpose of this Example was to establish whether adding a fiber or a gum to the treated protein isolates would generate a composition having water absorption properties similar to the original un-treated protein but would still lack the undesireable taste and odor characteristic of the untreated protein.

The results demonstrate that the addition of gum did not increase the water absorption properties of the compositions. In contrast, the addition of fiber improved the water absorption properties of the compositions. However in this test, only the glucomannan (hydrocolloid) worked as intended. An even higher amount of water was absorbed by Sample G (containing almost twice as much glucomannan as Sample F than absorbed by the original protein Sample A.

The results presented herein suggest that agents having water adsorption properties and hydration properties that are similar to glucomannan would be useful in the methods and products of this invention. Such agents could be found in the fibers, hydrocolloids and polymers families. The primary functionality of such agent should have a high viscosity (gel forming) and a high water absorption capability.

Based on the results of, Samples F and G, it is further evident that the pectin used conceal the bad flavor and reduce the water absorption does not interfere with the secondary fiber agent and vice versa, (i.e. samples C and E, have an approximate 26% reduction compared to the original untreated protein. Sample F has a 33.4% increase as compared to Samples C and E. Sample G has a 59.3% increase as compared to Samples C and E, which is in accordance with the water absorption ratio of the glucomannan).

### EXAMPLE 7

### I. Soy Beverage

A soy beverage, Sample A, was prepared using 18g of Sample F of Example 6 in 6 Fl.oz (177ml) of water. Immediately after mixing, the beverage had vanilla flavor but a "grainy" or "sandy" texture. After 5 minutes the graininess began to disappear and the drink become thicker.

After 10 additional minutes the flavor was unchanged, the texture was not grainy, but the protein could still be felt.

After 20 minutes the drink stabilized with a smooth texture and the taste was unchanged.

Left overnight at 5°C the drink separated such that the proteins were at the bottom of the container. The proteins mixed well with the aqueous solution when shaken but the settle back to the bottom after a couple of minutes. The taste was unchanged and a protein flavor was not detected.

A soy beverage was prepared as described above but made with the original untreated soy protein "Ardex R" (Sample A of Example 6). The finished product did not have desirable organoleptic properties, i.e., the beverage was acidic and had a strong soy protein taste.

### II. Soy Milk

In view of the results above for a soy beverage, the solubility of the treated proteins were assayed to determine if they were suitable for preparing a soy milk. The tests demonstrated that the proteins needed to be re-milled to a finer powder. A soy milk was prepared by mixing100 g of water, 0.5 g of sodium citrate, 1g of acacia gum and 15 g of protein sample 090/602-05 together. The solution was then pasteurized at 98°C for 3 minutes and rapidly cooled down to 20°C at -12°C for 4 minutes.

The proteins did not stay in suspension, the taste was sweet without protein flavor. Gums were added to help the dispersability of the proteins without much effect.

### III. Soy Ice Cream

A soy ice cream, Sample C, was prepared using the treated protein of Example 5, Sample F. The soy ice cream was prepared by re-hydrating 25 g of the treated protein overnight with 250 g of cold water.

The next day vanilla flavor, sugar and egg yolk was added to the hydrated treated protein and cooked on a stove. The cooked mixture was then cooled and processed in a "Krups" Ice cream machine to produce the soy ice cream. The resulting soy ice cream was compared to several commercially available soy ice creams.

The organoleptic properties of the soy ice cream comprising the treated protein of Example 5, Sample F were assayed and compared to soy ice creams currently available to the public. The texture was smooth, no (grains), off white in color, and looked like currently available soy ice creams. The taste was neutral with vanilla notes and had no detectable protein flavor.

After a week at -18°C the soy ice cream remained as the day it was prepared.

The results indicate that another 5 grams per serving may be added without any flavor reversion.

The soy beverage, soy milk and soy ice cream in Example 7 were prepared with "Ardex R" proteins treated as in Example 5, Sample F. The "Ardex R" proteins are the worst tasting and most insoluble proteins that we encountered. These results demonstrate that the methods of this invention are applicable to other proteins in addition to soy, e.g., rice, wheat or lupin, wherein it is desired to reduce the taste of the proteins but use them in a product without altering the organoleptic properties of the product.

### EXAMPLE 8

**Sample A:** Sample A is a soy protein isolate "ADM 825 Pro-Farm" treated with 2.5% w/w pectin and 1.25% w/w glucomannan. The treated soy protein was prepared as follows. In a blender (medium speed) 500g of water at 42°C, 3g of pectin Lm18CG (2.5% of the weight of the protein isolate) and 1.5g of glucomannan (Konjac Propol RS) (1.25% of the weight of the protein isolate) for one minute and ten seconds. Then 120g of soy protein Pro Farm 825 from ADM was added and mixed for four minutes and thirty seconds. The resulting mix was dried in a "Lang" oven at 150°F for three hours and ten minutes. The dried proteins were then milled to obtain a fine powder.

**Sample B**: Sample B is a lupin protein "Luprodin 100" treated with 3% pectin (w/w) and 2.5% glucomannan (w/w). The treated lupin protein was prepared as follows. In a blender (medium speed) 500g of water at 25°C, 3g of pectin Lm18CG and 2.5g of glucomannan (Konjac Propol RS, Kyoei Konnyaku,Inc. Japan) were mixed for one minute and ten seconds. Then 100g of lupin protein 100 was added and mixed for four minutes and five seconds. The resulting mix was dried in a "Lang" oven at 150°F for three hours and ten minutes. The dried proteins were then milled to obtain a fine powder.

**Sample C**: Sample C is gluten treated with 1.33% pectin (w/w) and 1.66% glucomannan (w/w). The treated gluten was prepared as follows:

In a blender (medium speed) 500g of water at 42°C, 2g of pectin Lm18CG and 2.5g of glucomannan (Konjac Propol RS) were mixed for one minute and ten seconds. Then 150g of gluten was added and mixed for five minutes. The resulting mix was dried in a "Lang" oven at 150°F for three hours and ten minutes. The dried proteins were then milled to obtain a fine powder.

The properties of the samples of treated proteins, appearance, taste and water adsorption ratio were assayed and compared. The results are presented in Table C:

| **Table C** | | | |
|---|---|---|---|
| **Sample** | **Appearance** | **Taste** | **Water Absorption Ratio** |
| A | Fine powder, free flowing. Light golden color | Bland taste, no odor. | The protein absorbed 4 times its own weight (equal to original). |
| B | Fine powder, free flowing. Yellow color | Light lupin taste not offensive, no odor. | The protein absorbed 5 times its own weight (equal to original)/ |
| C | Fine powder, free flowing. Brown color | Light gluten taste, no odor | The protein absorbed 4 times its own weight (equal to original). |

Sample A, a composition comprising a soy protein isolate treated with pectin and glucomannan, had no soy flavor or odor and had a water absorption ratio equal to the original untreated soy protein.

Sample B, a composition comprising lupin protein treated with pectin and glucomannan, had the water absorption ratio of untreated lupin protein but the lupin protein flavor was still be detected.

Sample C, a composition comprising gluten treated with pectin and glucomannan had the water absorption properties of untreated gluten. The composition still had a gluten taste but this was reduced as compared to the taste of the untreated gluten.

### EXAMPLE 10

I. A meat replacement product (Sample A) comprising the treated soy protein of Example 6, Sample G (soy treated with pectin and glucomannan), which absorbed the required amount of water (as based on the water absorption levels of the untreated original protein) was prepared by mixing 25 g of cold water with 10 g of treated protein and kept overnight. The following day the protein mixture was emulsified with 8 g of fat, 20 g egg white and beef flavor. Then 30 g of flour added and the mixture formed into a patty. Thus the product was made using similar techniques and ingredients as a comparable beef patty..
   The product was baked and the organoleptic properties of the baked product were analyzed. The resulting baked product was very moist and smooth (no grains) with a very good and clean taste (beef flavored) as compared to a real commercially available beef patty.
   Based on this test it is clear that the compositions of this invention comprising the treated soy protein having the water adsorption properties of the untreated protein could be used in other products such as sausages and meat replacement items can be produced without adverse effects.
II. A soy milk (Sample B) comprising the soy protein treated with 2.5% pectin and 1.25% glucomannan (Example 8, Sample B), was prepared as described in Example 7-II. The taste and texture of the soy milk was assayed. The soy milk tasted like sweet water with a vanilla hint and did not have a grainy texture. However the proteins settled to the bottom of the container with time.
III. A powdered beverage mix (Sample C), for reconstitution by a consumer, comprising the treated soy protein of Example 8, Sample A, was prepared by mixing 20 g of the treated protein, 5 g of non fat milk, 18 g of fructose, 2 g of vanilla flavor with 150 g of cold water (blender) and left overnight in a cooler. The powdered beverage mix were mixed with 5oz (150ml) of water such that the beverage contained 20 grams of soy protein. The beverage's taste and texture were analyzed. The taste and texture of proteins were undetectable in the beverage. However, overnight at 5°C, the beverage separated, the proteins settle to the bottom and became thick. Nonetheless, the beverage re-homogenized extremely well when shaken and remained stable for over forty minutes at 25°C.

The results presented herein demonstrate that the methods of this invention for reducing the taste and water adsorption of soy proteins and the methods of this invention for preparing compositions comprising the treated proteins but have the water adsorption properties of the untreated protein can be applied to other proteins e.g., wheat, lupin or rice.

By providing composition comprising the treated protein isolates wherein the compositions have the water absorption properties of the untreated proteins, most food products using commonly available proteins could be made with the compositions of this invention replacing the commonly available proteins in those products.

### EXAMPLE 11

**Sample A:** Sample A is a whey protein concentrate "Calpro brand" treated with 1.33% pectin (w/w) and 2% glucomannan (w/w). The treated whey protein concentrate was prepared as follows. In a blender (medium speed) 500g of water at 42°C, 2g of pectin Lm18CG and 3g of glucomannan (Konjac Propol RS) were mixed for one minute and ten seconds. Then 150g of whey protein concentrate was added and mixed for five minutes. The resulting mix was dried in a "Lang" oven at 150°F for three hours and forty-five minutes. The dried proteins were then milled to obtain a fine powder.

**Sample B:** Sample B is a calcium caseinate ""EXPRO Brand" treated with pectin 1.73% (w/w) and glucomannan 2.6% (w/w0. The treated calcium caseinate was prepared as follows. In a blender (medium speed) 500g of water at 42°C, 2g of pectin Lm18CG and 3g of glucomannan (Konjac Propol RS) were mixed for one minute and ten seconds. Then 115g of calcium caseinate was added and mixed for five minutes and thirty seconds. The resulting mix was dried in a "Lang" oven at 150°F for three hours and forty minutes. The dried proteins were then milled to obtain a fine powder.

**Sample C :** Sample C is a rice protein concentrate (Natural Product Brand) treated with pectin 1.33% (w/w) and glucomannan 2% (w/w). The treated rice protein concentrate was prepared as follows. In a blender (medium speed) 500g of water at 42°C, 2g of pectin Lm18CG and 3g of glucomannan (Konjac Propol RS) were mixed for one minute and ten seconds. Then 150g of Rice protein concentrate was added and mixed for three minutes. The resulting mix was dried in a "Lang" oven at 150°F for four hours and twenty minutes. The dried proteins were then milled to obtain a fine powder.

**Sample D:** Sample D is a soy protein isolate "Ardex R" treated with only glucomannan 2% (w/w) to evaluate whether or not the pectin was needed. The soy protein isolate treated with glucomannan was prepared as follows. In a blender (medium speed) 500g of water at 42°C and 3g of glucomannan (Konjac Propol RS) were mixed thirty seconds. Then 150g of soy protein was added and mixed for three minutes and ten seconds. The resulting mix was dried in a "Lang" oven at 150°F for three hours and forty minutes. The dried proteins were then milled to obtain a fine powder.

| **Table D** | | | |
|---|---|---|---|
| **Sample** | **Appearance** | **Taste** | **Water Adsorption Ratio** |
| A | Fine powder, free flowing. Off white color. | light sweet taste not offensive, no odor. | the protein absorbed 1.4 times its own weight (equal to original). |
| B | Fine powder, free flowing. white color. | light caseinate taste not offensive, no odor. | the protein absorbed close to 5 times its own weight (less than original 6 times its own weight). |
| C | Fine powder, free flowing. Brown color. | Almost no taste, no odor. | the protein absorbed close to 3 times its own weight (equal to original). |
| D | Fine powder, free flowing. Light yellow color. | offensive and acidic | the protein absorbed close to 4 times its own weight (same as original). |

Comparing the results obtained with Sample A, which comprises soy, pectin and glucomannan, and the results obtained with Sample D, which comprises only soy and glucomannan, it is clear that the pectin is required to reduce the offensive taste of the protein isolates

### EXAMPLE 12

### I. Pasta Dough

A pasta dough comprising the treated soy protein of Example 6, Sample G was prepared by 40 g of the treated protein, 30 g of bread flour, 1 egg, salt were mixed together in a small mixer. The dough was laminated and cut in pasta shapes with a "Noodle machine maker". The pastas were dried at room temperature and cooked "al Dente". The preparation and mixing of the dough was similar to comparable products. The taste and texture of the cooked pasta comprising the treated proteins were compared to a cooked commercially available semolina pasta. The taste of the cooked pastas containing the treated soy protein was identical to the traditional pasta made with semolina. No protein flavor was present. The pasta comprising the treated proteins of this invention contained 33% total protein from which 25% came from soy protein isolates.

### II. Bread Dough

A bread dough comprising the treated soy protein Example 8, Sample A, was prepared by mixing 30 g of protein 091/102-01, 20 g of bread flour, salt yeast and 55 g of cold water in a "Kitchen Mixer". The dough rested at room temperature for 3 hours to allow it to rise. Then was shaped into a bread product. The bread was allowed the time to raise (45 minutes) and baked at 450 °F. The taste and texture of the baked bread was compared to commercially available bread bought at a local bread maker. The bread was very moist and salty and had no protein flavor.

### III. A Cookie Dough

A cookie dough comprising the treated soy protein of Example 8, Sample A, was prepared as follows. 24 g of butter, 12 g of sugar and one egg were mixed together. Then 30 g of the treated protein, 5 g of cocoa powder and 10 g of all purpose flour were added to the mixture. Thus the dough was made similarly to traditional cookie dough. The dough was shaped into cookie shapes and baked at 350oF. The cookies were moist although a little harder than the original product, and did not have a protein taste or odor.

The water adsorption properties of the treated proteins prepared as described in Example 11, A-C demonstrate that the addition of glucomannan worked as well with an assortment of proteins (other than soy). The results demonstrate that the levels of water absorption in the samples containing the glucomannan were close to or equal to the water adsorption ratios of the original proteins. To further alter the water adsorption levels of any given protein the amount of glucomannan in the process would be altered.

Example 8, Sample D, containing exclusively the glucomannan, did not conceal the offensive flavor of the untreated soy protein. This result demonstrates that the pectin treatment as described herein confers the desired organoleptic properties, i.e., the lack of a beanie or bitter taste characteristic of the untreated soy protein, .to the final food products.

The organoleptic properties of the pasta, bread and cookies comprising the treated proteins of this invention demonstrate that the treated proteins worked very well in any of the food products. The food products in this example contain 25% to 26% of soy protein isolates, although the level of protein can be increased or decreased depending as desired in other applications.

As demonstrated herein, the methods of this invention for producing compositions, which comprise the treated soy protein isolates and which have the water adsorption ratios of untreated soy protein isolates, is applicable to other proteins e.g., rice protein concentrates, lupin protein concentrates, wheat concentrates and whey protein concentrates.

The fiber that performed well under this test is glucomannan. Without wishing to be bound by theory, the hydration properties of the glucomannan may be the major factor in its successful use in the methods of this invention. Thus it is expected that other fibers or polymers with similar water absorption and gelation properties would be applicable for this method.

The compositions of this invention comprise treated protein isolates wherein the proteins *per se* have a reduced water adsorption ratio. Nonetheless, the compositions of this invention have water adsorption ratios that are similar or essentially identical to the untreated proteins, which is achieved by including a fiber, particularly a hydrocolloid like glucomannan in the composition. The compositions of this invention are thus useful for preparing food products that require ingredients having a high water adsorption ratio to maintain the desired organoleptic properties of those food products..

Another advantage of the protein isolates of this invention and the compositions of this invention comprising those treated proteins is that the labeling of the protein isolates complies with USDA/FDA regulations.

## Claims

1. A method for producing a protein isolate having a bland flavor and a low water absorption ratio comprising mixing a protein isolate with an aqueous polysaccharide solution under such conditions that the polysaccharide coats the protein isolate, then drying the aqueous solution comprising the polysaccharide and protein isolate wherein the dried protein isolate has a bland flavor and low water absorption ratio.

2. A method according to claim 1 wherein said protein isolate is a soy protein concentrate.

3. A method according to claim 1 wherein said protein isolate is mixed with an aqueous solution comprising a polysaccharide wherein said polysaccharide and said protein isolate are in a ratio of about 1/100 w/w.

4. A method according to claim 3 wherein the polysaccharide is pectin.

5. The method of claim 4 wherein the pectin is a low methoxyl pectin.

6. The method of claim 5 wherein the low methoxyl pectin is an amidated low methoxyl pectin.

7. A method according to claim 3 wherein the protein is added to the aqueous solution comprising the polysaccharide and mixed in a high shear mixer, a rotary mixer or a planetary mixer.

8. A method according to claim 7 wherein the protein and aqueous solution comprising the polysaccharide is mixed in a planetary mixer.

9. A method according to claim 4 wherein the aqueous solution comprising the protein and polysaccharide is dried to a powder form.

10. A process according to claim 9 wherein the aqueous solution comprising the protein and polysaccharide is spray dried or vacuum dried.

11. A protein isolate obtainable by the method of any one of claim 1-10.

12. The protein isolate of claim 11 wherein the protein isolate is a wheat protein concentrate or a soy protein concentrate.

13. A food product comprising the protein isolate of claim 11.

14. The food product of claim 13 wherein said food product is a snack bar, a protein bar, a breakfast cereal, a pancake, a waffle, a muffin, a cake, a cookie, a meal replacement formulation, a vegetarian food, a meat replacement or a candy.

15. The food product of claim 14 wherein the protein isolate is a soy protein concentrate of claim 12.

16. The food product of claim 14 wherein the protein isolate is a wheat protein concentrate of claim 12.

17. The food product of claim 14 wherein the vegetarian food is a vegetarian burger, tofu, a vegetarian hot-dog, a vegetarian deli slice or soy ice cream.

18. A method for increasing protein content of a food product comprising incorporating into a food product a protein isolate produced by the method of any one of claim 1-10, wherein the protein isolate is incorporated in an amount sufficient to increase the protein content of the food product.

19. A method for increasing protein content of a food product according to claim 18 wherein said protein isolate is a soy protein concentrate.

20. A method for preparing a protein composition wherein said protein composition has a bland taste, said method comprising preparing an aqueous polysaccharide solution, mixing a fiber with said aqueous polysaccharide solution to form a second aqueous solution, mixing the second aqueous solution with a protein isolate to form an aqueous protein solution, drying the aqueous protein solution comprising the polysaccharide, fiber and protein isolate, to form a protein composition, wherein the protein composition has a bland flavor and a water absorption ratio similar to the water adsorption ratio of the protein isolate.

21. The method of claim 20 wherein the fiber is glucomannan.

22. The method of claim 21 wherein the glucomannan is present in about 1.5% to about 4% w/w of the protein composition.

23. The method of claim 20 wherein the protein composition is milled to a fine powder.

24. The method of claim 20 wherein the protein isolate is a soy protein isolate, a wheat protein isolate, a rice protein isolate or a lupin protein isolate.

25. A food product comprising a protein composition obtainable by the method of claim 20.

26. The food product of claim 25 wherein said food product is farinaceous food product or a meat food product.

27. The food product of claim 26 wherein said farinaceous food product is a bread, pancake, waffle, pasta, cake, biscuit or cookie.

28. The food product of claim 26 wherein said meat food product is ground meat patty, a sausage, hot-dogs, deli slice, emulsion type sausage, fish stick or meatball.

## Patentansprüche

1. Verfahren zur Herstellung eines Proteinisolats mit einem milden Geschmack und einer geringen Wasserabsorptionsrate, umfassend das Vermischen eines Proteinisolats mit einer wässrigen Polysaccharidlösung unter solchen Bedingungen, dass das Polysaccharid das Proteinisolat beschichtet, dann das Trocknen der wässrigen Lösung, die das Polysaccharid und das Proteinisolat enthält, worin das getrocknete Proteinisolat einen milden Geschmack und eine geringe Wasserabsorptionsrate aufweist.

2. Verfahren nach Anspruch 1, worin das Proteinisolat ein Sojaproteinkonzentrat ist.

3. Verfahren nach Anspruch 1, worin das Proteinisolat mit einer wässrigen Lösung vermischt wird, die ein Polysaccharid umfasst, worin das Polysaccharid und das Proteinisolat in einem Verhältnis von etwa 1:100 Gew./Gew. vorhanden sind.

4. Verfahren nach Anspruch 3, worin das Polysaccharid Pektin ist.

5. Verfahren nach Anspruch 4, worin das Pektin ein Pektin mit niedrigem Methoxygehalt ist.

6. Verfahren nach Anspruch 5, worin das Pektin mit niedrigem Methoxygehalt ein amidiertes Pektin mit niedrigem Methoxygehalt ist.

7. Verfahren nach Anspruch 3, worin das Protein zur wässrigen Lösung, die das Polysaccharid umfasst, zugesetzt wird und in einem Mischer mit hoher Scherung, einem Trommelmischer oder einem Planetenmischer vermischt wird.

8. Verfahren nach Anspruch 7, worin das Protein und die wässrige Lösung, die das Polysaccharid umfasst, in einem Planetenmischer vermischt werden.

9. Verfahren nach Anspruch 4, worin die wässrige Lösung, die das Protein und das Polysaccharid umfasst, in Pulverform getrocknet wird.

10. Verfahren nach Anspruch 9, worin die wässrige Lösung, die das Protein und das Polysaccharid umfasst, sprühgetrocknet oder vakuumgetrocknet wird.

11. Proteinisolat, erhältlich durch ein Verfahren nach einem der Ansprüche 1-10.

12. Proteinisolat nach Anspruch 11, worin das Proteinisolat ein Weizenproteinkonzentrat oder ein Sojaproteinkonzentrat ist.

13. Nahrungsmittelprodukt, umfassend ein Proteinisolat nach Anspruch 11.

14. Nahrungsmittelprodukt nach Anspruch 13, worin das Nahrungsmittelprodukt ein Snackriegel, ein Proteinriegel, Frühstückscerealien, eine Palatschinke, eine Waffel, ein Muffin, ein Kuchen, ein Keks, eine Mahlzeitersatzformulierung, ein vegetarisches Nahrungsmittel, Fleischersatz oder eine Süßigkeit ist.

15. Nahrungsmittelprodukt nach Anspruch 14, worin das Proteinisolat ein Sojaproteinkonzentrat nach Anspruch 12 ist.

16. Nahrungsmittelprodukt nach Anspruch 14, worin das Proteinisolat ein Weizenproteinkonzentrat nach Anspruch 12 ist.

17. Nahrungsmittelprodukt nach Anspruch 14, worin das vegetarische Lebensmittel ein vegetarischer Burger, Tofu, ein vegetarisches Hotdog, vegetarische Feinkost oder Sojaeis ist.

18. Verfahren zur Erhöhung des Proteingehalts eines Nahrungsmittelprodukts, umfassend das Inkorporieren eines durch ein Verfahren nach einem der Ansprüche 1-10 hergestellten Proteinisolats in ein Nahrungsmittelprodukt, worin das Proteinisolat in einer Menge inkorporiert wird, die ausreicht, um den Proteingehalt des Nahrungsmittelprodukts zu erhöhen.

19. Verfahren zur Erhöhung des Proteingehalts eines Nahrungsmittelprodukts nach Anspruch 18, worin das Proteinisolat ein Sojaproteinkonzentrat ist.

20. Verfahren zur Herstellung einer Proteinzusammensetzung, worin die Proteinzusammensetzung einen milden Geschmack hat, wobei das Verfahren das Herstellen einer wässrigen Polysaccharidlösung, das Vermischen einer Faser mit der wässrigen Polysaccharidlösung, um eine zweite wässrige Lösung zu bilden, das Vermischen der zweiten wässrigen Lösung mit einem Proteinisolat, um eine wässrige Proteinlösung zu bilden, das Trocknen der wässrigen Proteinlösung, die das Polysaccharid, die Faser und das Proteinisolat umfasst, umfasst, um eine Proteinzusammensetzung zu bilden, worin die Proteinzusammensetzung einen milden Geschmack und eine Wasserabsorptionsrate aufweist, die der Wasserabsorptionsrate des Proteinisolats ähnelt.

21. Verfahren nach Anspruch 20, worin die Faser Glucomannan ist.

22. Verfahren nach Anspruch 21, worin das Glucomannan in einer Menge von etwa 1,5 bis etwa 4 Gew.-% der Proteinzusammensetzung vorhanden ist.

23. Verfahren nach Anspruch 20, worin die Proteinzusammensetzung zu einem feinen Pulver gemahlen wird.

24. Verfahren nach Anspruch 20, worin das Proteinisolat ein Sojaproteinisolat, ein Weizenproteinisolat, ein Reisproteinisolat oder ein Lupinproteinisolat ist.

25. Nahrungsmittelprodukt, umfassend eine Proteinzusammensetzung, die durch ein Verfahren nach Anspruch 20 erhältlich ist.

26. Nahrungsmittelprodukt nach Anspruch 25, worin das Nahrungsmittelprodukt ein Mehlnahrungsmittelprodukt oder ein Fleischnahrungsmittelprodukt ist.

27. Nahrungsmittelprodukt nach Anspruch 26, worin das Mehlnahrungsmittelprodukt Brot, eine Palatschinke, eine Waffel, Teigwaren, ein Kuchen, ein Brötchen oder ein Keks ist.

28. Nahrungsmittelprodukt nach Anspruch 26, worin das Fleischnahrungsmittelprodukt ein faschiertes Laibchen, Wurst, ein Hotdog, Feinkost, Wurst vom Emulsionstyp, ein Fischstäbchen oder ein Fleischbällchen ist.

## Revendications

1. Procédé de production d'un isolat protéique de saveur fade et à taux d'absorption d'eau faible comprenant le mélange d'un isolat protéique avec une solution polysaccharidique aqueuse dans des conditions telles que le polysaccharide enrobe l'isolat protéique, puis le séchage de la solution aqueuse contenant le polysaccharide et l'isolat protéique où l'isolat protéique séché est de saveur fade et à taux d'absorption d'eau faible.

2. Procédé selon la revendication 1 dans lequel ledit isolat protéique est un concentré de protéines de soja.

3. Procédé selon la revendication 1 dans lequel ledit isolat protéique est mélangé avec une solution aqueuse comportant un polysaccharide, où ledit polysaccharide et ledit isolat protéique sont présents dans un rapport d'environ 1/100 M/M.

4. Procédé selon la revendication 3 dans lequel le polysaccharide est une pectine.

5. Procédé selon la revendication 4 dans lequel la pectine est une pectine à faible teneur en méthoxyles.

6. Procédé selon la revendication 5 dans lequel la pectine à faible teneur en méthoxyles est une pectine à faible teneur en méthoxyles amidée.

7. Procédé selon la revendication 3 dans lequel la protéine est ajoutée à la solution aqueuse contenant le polysaccharide et mélangée dans un mélangeur à cisaillement élevé, un mélangeur rotatoire ou un mélangeur planétaire.

8. Procédé selon la revendication 7 dans lequel la protéine et la solution aqueuse contenant le polysaccharide sont mélangées dans un mélangeur planétaire.

9. Procédé selon la revendication 4 dans lequel la solution aqueuse contenant la protéine et le polysaccharide est séchée jusqu'à obtenir une forme poudreuse.

10. Procédé selon la revendication 9 dans lequel la solution aqueuse contenant la protéine et le polysaccharide est séchée par atomisation ou séchée sous vide.

11. Isolat protéique pouvant être obtenu par le procédé de l'une quelconque des revendications 1-10.

12. Isolat protéique de la revendication 11 où l'isolat protéique est un concentré de protéines de blé ou un concentré de protéines de soja.

13. Produit alimentaire comprenant l'isolat protéique de la revendication 11.

14. Produit alimentaire de la revendication 13, ledit produit alimentaire étant une barre en-cas, une barre aux protéines, une céréale pour petit déjeuner, une crêpe, une gaufre, un muffin, un gâteau, un gâteau sec, une préparation de substitut de repas, un aliment végétarien, un substitut de viande ou un bonbon.

15. Produit alimentaire de la revendication 14 dans lequel l'isolat protéique est un concentré de protéines de soja de la revendication 12.

16. Produit alimentaire de la revendication 14 dans lequel l'isolat protéique est un concentré de protéines de blé de la revendication 12.

17. Produit alimentaire de la revendication 14 dans le quel l'aliment végétarien est un hamburger végétarien, du tofu, un hot-dog végétarien, de la charcuterie fine en tranches végétarienne ou de la crème glacée au soja.

18. Procédé pour augmenter la teneur en protéines d'un produit alimentaire comprenant l'incorporation d'un isolat protéique produit par le procédé de l'une quelconque des revendications 1-10 à un produit alimentaire, dans lequel l'isolat protéique est incorporé en une quantité suffisante pour augmenter la teneur en protéines du produit alimentaire.

19. Procédé pour augmenter la teneur en protéines d'un produit alimentaire selon la revendication 18 dans lequel ledit isolat protéique est un concentré de protéines de soja.

20. Procédé de production d'une composition protéique dans lequel ladite composition protéique est de saveur fade, ledit procédé comprenant la préparation d'une solution polysaccharidique aqueuse, le mélange d'une fibre avec ladite solution polysaccharidique aqueuse pour former une seconde solution aqueuse, le mélange de la seconde solution aqueuse avec un isolat protéique pour former une solution protéique aqueuse, le séchage de la solution protéique aqueuse contenant le polysaccharide, la fibre et l'isolat protéique, pour former une composition protéique, où la composition protéique est de saveur fade et à taux d'absorption d'eau similaire au taux d'absorption d'eau de l'isolat protéique.

21. Procédé de la revendication 20 dans lequel la fibre est du glucomannane.

22. Procédé de la revendication 21 dans lequel le glucomannane est présent à raison d'environ 1,5 % à environ 4 % M/M de la composition protéique.

23. Procédé de la revendication 20 dans lequel la composition protéique est broyée jusqu'à l'obtention d'une poudre fine.

24. Procédé de la revendication 20 dans lequel l'isolat protéique est un isolat de protéines de soja, un isolat de protéines de blé, un isolat de protéines de riz, ou un isolat de protéines de lupin.

25. Produit alimentaire comprenant une composition protéique pouvant être obtenue par le procédé de la revendication 20.

26. Produit alimentaire de la revendication 25 dans lequel ledit produit alimentaire est un produit alimentaire à base de farine ou un produit alimentaire à base de viande.

27. Produit alimentaire de la revendication 26 dans lequel ledit produit alimentaire à base de farine est un pain, une crêpe, une gaufre, une pâte alimentaire, un gâteau, un biscuit ou un gâteau sec.

28. Produit alimentaire de la revendication 26 dans lequel ledit produit alimentaire à base de viande est une portion de viande hachée, une saucisse, un hot-dog, de la charcuterie fine en tranches, une saucisse de type émulsion, un bâtonnet de poisson ou une boulette de viande.
